# EUROPEAN PATENT APPLICATION

(11) **EP 1 261 221 A1**
(43) Date of publication of application: **27.11.2002**
(21) Application number: 00985978.6
(22) Date of filing: 28.12.2000
(51) Int. Cl.: H04Q 7/20, G01S 5/14

(54) **POSITION INFORMATION NOTIFYING SYSTEM AND METHOD**

(71) Applicant: Matsushita Electric Industrial Co., Ltd., Kadoma-shi, Osaka-fu, 571-8501 (JP)
(72) Inventor: ADACHI, Yasuhiro, Yokosuka-shi, Kanagawa 239-0847 (JP)
(74) Representative: Grünecker, Kinkeldey, Stockmair & Schwanhäusser Anwaltssozietät
(86) International application number: JP0009390
(87) International publication number: WO02054799

(57) **Abstract**

One or more predetermined wireless terminal apparatus 101 and 102 are registered as a group in advance with administrating station 108 connected to exchange network 104. A position information acquisition request is made from a position information acquiring terminal such as mobile phone apparatus 103 for a desired group. Administrating station 108 requests all wireless terminal apparatus 101 and 102 of the group corresponding to the request to send current position information. Wireless terminal apparatus 101 and 102, upon receiving the request, acquire their own current position information by way of acquiring electric waves from GPS satellites 109 and 110 and send the acquired current position information to administrating station 108. Administrating station 108 returns the received current position information to mobile phone apparatus 103, the source of the position information acquisition request. In accordance with this current position information, mobile phone apparatus 103 displays each terminal's current position.

## Description

### Technical Field

The present invention relates to position information notification systems and methods whereby information is acquired regarding the positions of wireless terminals used in mobile communication systems such as personal handy phones, mobile phone, and information terminals with information processing functions, through such terminals as wireless terminals and personal computers.

### Background Art

A conventional position information notification system and method of the above type is recited in Japanese Laid-Open Patent Publication No.5-167704.

According to the method recited in the above publication, a wireless terminal, when moving across areas formed by electric waves from base stations, acquires position information for the area the terminal moves to from the base station and sends the acquired position information via the base station to the position information administrating apparatus that the information recipient holds, and the position information administrating apparatus updates the position information database based on this position information and notifies the information recipient of the wireless terminal's position information.

However, according to the above conventional position information notification system, positions are acquired on an area-unit basis, and yet the problem therewith is the incompetence to acquire precise position information. Also, even when the information recipient does not need a wireless terminal's position information, the wireless terminal nevertheless, every time it moves across base station areas, sends information regarding its position in the area it moves into, and the problem therewith is communication traffic increase. Furthermore, when the information recipient wants to know position information regarding a number of wireless terminals, the information recipient needs to receive the information by making a position information acquisition request on a per wireless terminal basis in sequence. The problem here is that the operations for such acquisition requests become complicated.

### Disclosure of Invention

The present invention aims to provide a position information notification system and method, whereby position information regarding a number of wireless terminals can be acquired at a time by simple operations while communication traffic increase is minimized, and whereby furthermore precise information can be acquired regarding the positions of the wireless terminals.

To accomplish the above objective, the present invention is configured in such a way that a number of wireless terminals subject to acquisition of current position are divided into several groups, and when the user requests acquisition of position information that shows the current positions of a wireless terminal, then in response to one request, position information regarding all the wireless terminals included in the group specified by the user will be notified to the user through a position information acquiring terminal.

To be more specific, the present invention is configured in such a way that one or more predetermined wireless terminals are registered in advance as a group with the administrating station connected to base stations by an exchange network; a position information acquisition request is made from a position information acquiring terminal such as a mobile phone in respect to a desired group; the administrating station requests all the wireless terminals of the group that corresponds to the request to send current position information; each terminal that received this request acquires its own current position information by receiving electric waves from GPS satellites and sends the acquired current position information to the administrating station; the administrating station returns the received position information to the source of the position information acquisition request, a position information acquiring terminal such as a mobile phone; and the position information acquiring terminal such as a mobile phone shows each terminal's current position according to the current position information.

### Brief Description of Drawings

FIG. 1 is a block diagram showing a configuration of a position information notification system according to Embodiment 1 of the present invention;
FIG.2 is a block diagram showing a configuration of a position information notification system according to Embodiment 2 of the present invention;
FIG.3 is a block diagram showing a configuration of a position information notification system according to Embodiment 3 of the present invention;
FIG.4 is a block diagram showing a configuration of a position information notification system according to Embodiment 4 of the present invention;
FIG.5 is a block diagram showing a configuration of a position information notification system according to Embodiment 5 of the present invention;
FIG.6 is a block diagram showing a configuration of a position information notification system according to Embodiment 6 of the present invention;
FIG.7 is a block diagram showing a configuration of a position information notification system according to Embodiment 7 of the present invention; and
FIG.8 is a block diagram showing a configuration of a position information notification system according to Embodiment 8 of the present invention.

### Best Mode for Carrying Out the Invention

With reference to the accompanying drawings now, the embodiments of the present invention will be described in detail.

### (Embodiment 1)

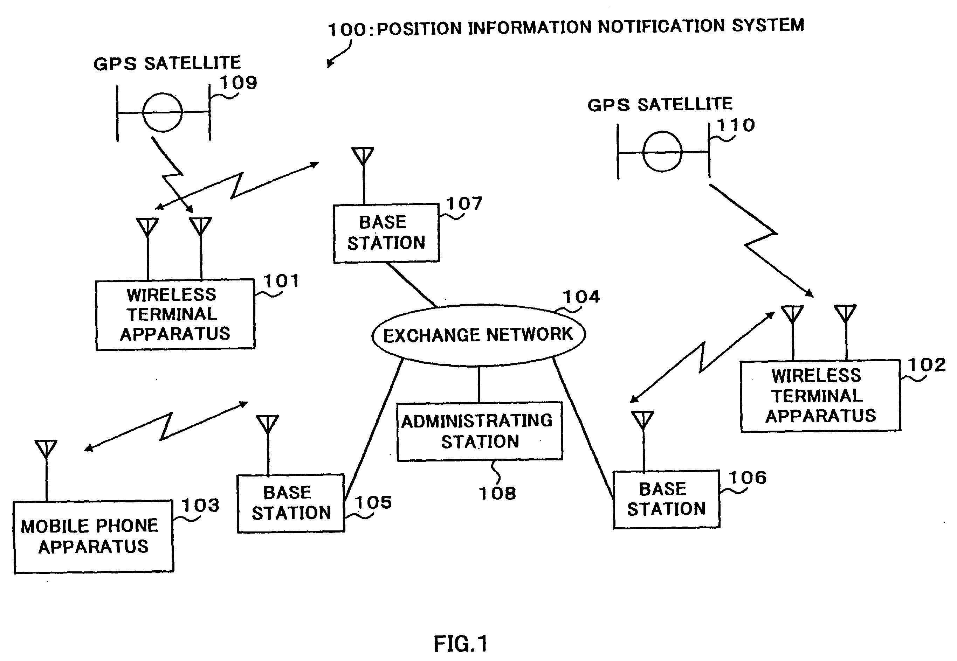

FIG.1 is a block diagram showing a configuration of a position notification system according to Embodiment 1 of the present invention. Note that the configuration of this position information notification system 100 shown in FIG.1 is one in which mobile phone apparatus 103, which makes a position information acquisition request, is notified of position information regarding a number of wireless terminal apparatus 101 and 102 such as personal handy phones, mobile phones, and information terminal apparatus for use with mobile communication systems . In short, this is a configuration in which mobile phone apparatus 103 is used as a position information acquiring terminal.

This position information notification system 100 consists essentially of a number of base stations 105, 106, 107 as well as administrating station 108; a number of GPS satellites 109 and 110 ; wireless terminal apparatus 101 and 102 that perform wireless communication with each of base stations 105 through 107 while receiving electric waves from GPS satellites 109 and 110 to acquire position information; and mobile phone apparatus 103.

In administrating station 108, a number of predetermined wireless terminal apparatus 101 and 102 are registered as one group with a table. Moreover, administrating station 108 features the function for requesting all wireless terminal apparatus 101 and 102 of the group to send current position information when a position information acquisition request is made in respect to the above group from mobile phone apparatus 103, and for sending the current position information sent to administrating station 108 in response to the request from all wireless terminal apparatus 101 and 102 of the group to the source of the position information acquisition request, mobile phone apparatus 103.

Wireless terminal apparatus 101 and 102 feature the function for acquiring their own current position information by way of receiving electric waves that are sent from GPS satellites 109 and 110 for acquisition of position information, when a transmission request for current position information is made from administrating station 108, and for modulating the current position information into transmit signals and sending the transmit signals to administrating station 108.

Mobile phone apparatus 103 features the function for sending a position information acquisition request signal to administrating station 108 in response to the user's key-input control for a current position information acquisition request in respect to a desired group, and for showing the current positions that accord with the current position information sent to mobile phone apparatus 103 from administrating station 108 in response to the above acquisition request signal by showing them either on a map displayed on a display section built in dedicated terminal apparatus 201 such as a liquid crystal display or a plasma display or by showing them by way of showing characters on the display section.

However, such configuration is also possible that wireless terminal 101, 102, and mobile phone apparatus 103 each features both of the above function that mobile station 101 and 102 each feature and the function that mobile phone apparatus 103 features.

The operation of position information notification system 100 of such configuration will be described.

First, when the user performs the control for a current position information acquisition request in respect to a desired group by key-input using mobile phone apparatus 103, in response to this control, a position information acquisition request signal that denotes a desired group will be sent to administrating station 108 via base station 105 and exchange network 104.

Suppose here, for instance, a number of wireless terminals are grouped into 4 groups A to E, and wireless terminal apparatus 101 and 102 belong to group A. If the user of mobile phone apparatus 103 wants to know current position information for wireless terminal apparatus 101 and 102 of group A, the user of mobile phone apparatus 103 will perform key-input that specifies group A. Then, a position information acquiring request signal that denotes group A will be sent from mobile phone apparatus 103 to administrating station 108.

With a table that stores each group with each terminal's telephone number or ID (Identifier) number in correspondence, administrating station 108 that has received the position information acquisition request signal reads out from the table the telephone numbers and ID numbers of all the wireless terminals that belong under the group specified by the position information acquisition request signal. For instance, upon receiving a position information acquisition request signal denoting group A, administrating station 108 looks up the table and reads out the telephone numbers and ID (Identifier) numbers of wireless terminal apparatus 101 and 102 that belong under group A from the table. Then, via exchange network 104 and base stations 106 and 107, administrating station 108 requests wireless terminal apparatus 101 and 102 that belong under group A to send current position information.

Upon receiving this request, wireless terminal apparatus 101 and 102 acquire their own current position information by way of receiving electric waves that are sent from GPS satellites 109 and 110 for acquisition of position information and then send the current position information to administrating station 108 via base station 106, 107, and exchange network 104.

Upon receiving current position information for wireless terminal apparatus 101 and 102, administrating station 108 sends the received current position information for wireless terminal apparatus 101 and 102 to the source of the position information acquisition request, mobile phone apparatus 103, via exchange network 104 and base station 105.

Upon receiving the current position information, mobile phone apparatus 103 shows the current positions of wireless terminal 102 and 103 on a map displayed on the display section or shows them on the display section by means of characters. With such displaying, by one acquisition request, the user is able to know at a time the current positions of all the wireless terminals that belong under the group that the user specifies (that is, wireless terminal apparatus 101 and 102 that belong under group A).

According to position information notification system 100 of Embodiment 1, the configuration is such that when a position information acquisition request is to be made, a group subject to acquisition of position information is specified from predetermined groups and current position information is acquired at a time in respect to all the wireless terminal apparatus belonging under this group, so that it is unnecessary to perform the control for a position information acquisition request on a per wireless terminal basis as it was conventionally done, and position information for a number of wireless terminal apparatus can be acquired in a simple way.

Moreover, only when a position information acquisition request is made from mobile phone apparatus 103 to administrating station 108, will wireless terminal apparatus 101 and 102 send their own current position information. In other words, when the information recipient does not need position information, no position information will be sent from wireless terminal apparatus 101 and 102. Consequently, it is possible to reduce communication traffic compared to the above conventional position information notification system in which a wireless terminal sends position information regardless whether the information recipient is in need of such information.

Moreover, since wireless terminal apparatus 101 and 102 acquire their own current position information using electric waves sent form GPS satellites 109 and 110, it is possible to acquire position information that is more precise than the conventional area-unit position information.

### (Embodiment 2)

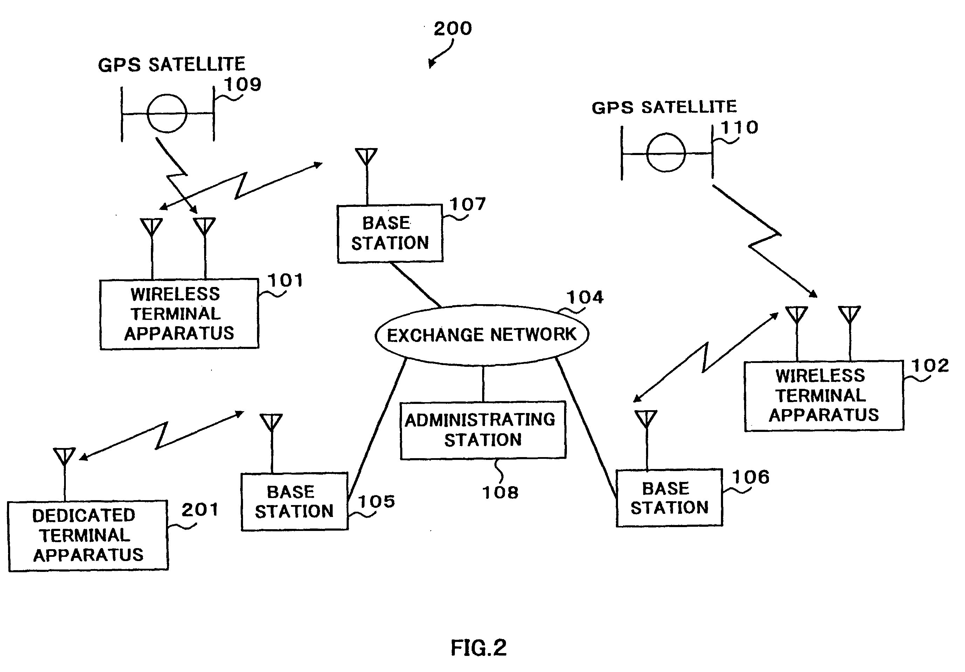

FIG.2 is a block diagram showing a configuration of a position information notification system according to Embodiment 2 of the present invention. In FIG.2, however, sections that correspond with those in FIG.1 will be given the same numerals without further description.

The difference between position information notification system 200 of Embodiment 2 shown in FIG.2 and FIG.1 is that, in the former, dedicated terminal apparatus 201, which is for the sole use of position information acquisition, is used as a position information acquiring terminal instead of mobile phone apparatus 103 to acquire current position information for wireless terminal apparatus 101 and 102.

Dedicated terminal apparatus 201 features the wireless communication function of base station 105 and the function for sending a position information acquisition request signal to administrating station 108 in response to the user's key-input control for a current position information acquisition request in respect to a desired group and for showing the current positions that accord with the current position information sent to dedicated terminal apparatus 201 from administrating station 108 in response to the above acquisition request signal by showing them either on a map displayed on a display section built in dedicated terminal apparatus 201 or by showing them by way of showing characters on the display section.

The operation of position information notification system 200 of such configuration will be described.

First, when the user performs the control for a current position information acquisition request in respect to a desired group by key-input using dedicated terminal apparatus 201, in response to this control, a position information acquisition request signal that denotes a desired group will be sent to administrating station 108 via base station 105 and exchange network 104.

Upon receiving the position information acquisition request signal, administrating station 108 reads out from the table the telephone numbers and ID (Identifier) numbers of all wireless terminal apparatus 101 and 102 that belong under the group specified by the position information acquisition request signal and requests via exchange network 104 and base stations 106 and 107 all wireless terminal apparatus 101 and 102 that belong under the group to send current position information.

Upon receiving this request, wireless terminal apparatus 101 and 102 acquire their own current position information by way of receiving electric waves that are sent from GPS satellites 109 and 110 for acquisition of position information and then send the current position information to administrating station 108 via base station 106, 107, and exchange network 104.

Upon receiving current position information for wireless terminal apparatus 101 and 102, administrating station 108 sends the received current position information for wireless terminal apparatus 101 and 102 to the source of the position information acquisition request, dedicated terminal apparatus 201, via exchange network 104 and base station 105.

Upon receiving the current position information, dedicated terminal apparatus 201 shows the current positions of wireless terminal 102 and 103 either on a map displayed on the display section or shows them on the display section by means of characters. With such displaying, by one acquisition request, the user is able to know at a time the current positions of all wireless terminal apparatus 101 and 102 that belong under the group that the user specifies.

Thus according to position information notification system 200 of Embodiment 2, the configuration is such that, by using dedicated terminal apparatus 201, position information acquisition request is implemented as in Embodiment 1 and current positions of a number of wireless terminal apparatus 101 and 102 are displayed, so that the same effect is achieved as Embodiment 1 by the use of dedicated terminal apparatus 201 dedicated to position information acquisition.

### (Embodiment 3)

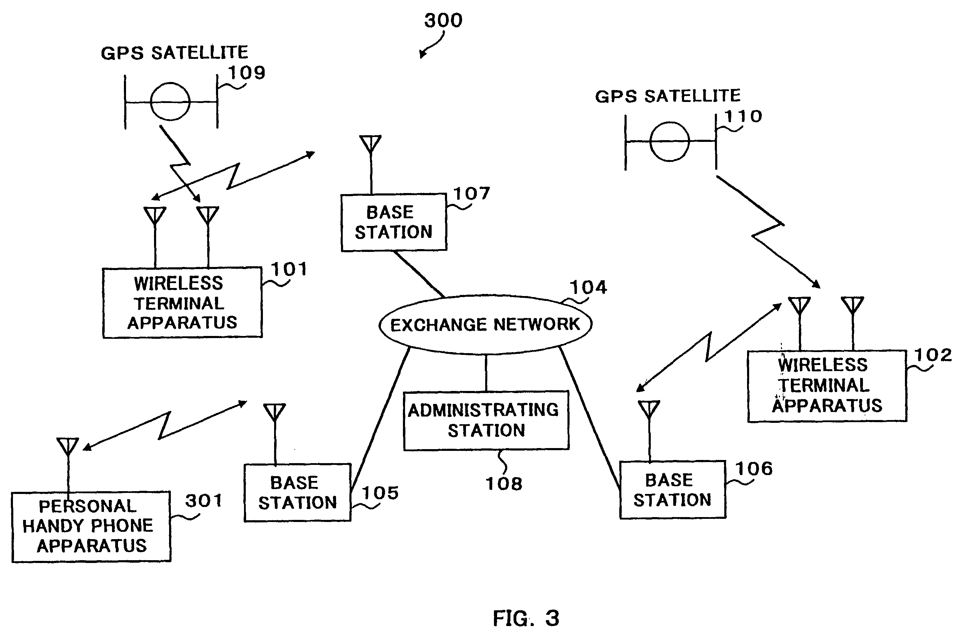

FIG.3 is a block diagram showing a configuration of a position information notification system according to Embodiment 3 of the present invention. In FIG.3, however, sections that correspond with those in FIG. 1 will be given the same numerals without further description.

The difference between position information, notification system 300 of Embodiment 3 shown in FIG.3 and FIG.1 is that, in the former, personal handy phone apparatus 301 is used instead of mobile phone apparatus 103 to acquire current position information for wireless terminal apparatus 101 and 102.

Personal handy phone apparatus 301 features the function for sending a position information acquisition request signal to administrating station 108 in response to the user's key-input control for a current position information acquisition request in respect to a desired group and for showing the current positions that accord with the current position information sent to personal handy phone apparatus 301 from administrating station 108 in response to the above acquisition request signal by showing them either on a map displayed on a display section built in personal handy phone apparatus 301 or by showing them by way of showing characters on the display section.

The operation of position information notification system 300 of such configuration will be described.

First, when the user performs the control for a current position information acquisition request in respect to a desired group by key-input using personal handy phone apparatus 301, in response to this control, a position information acquisition request signal that denotes a desired group will be sent to administrating station 108 via base station 105 and exchange network 104.

Upon receiving a position information acquisition request signal, administrating station 108 reads out from the table the telephone numbers and ID numbers of all wireless terminal apparatus 101 and 102 that belong under the group specified by the position information acquisition request signal and requests via exchange network 104 and base stations 106 and 107 all wireless terminal apparatus 101 and 102 that belong under the group to send current position information.

Upon receiving this request, wireless terminal apparatus 101 and 102 acquire their own current position information by way of receiving electric waves that are sent from GPS satellites 109 and 110 for acquisition of position information and then send the current position information to administrating station 108 via base station 106, 107, and exchange network 104.

Upon receiving current position information for wireless terminal apparatus 101 and 102, administrating station 108 sends the received current position information for wireless terminal apparatus 101 and 102 to the source of the position information acquisition request, personal handy phone apparatus 301, via exchange network 104 and base station 105.

Upon receiving the current position information, personal handy phone apparatus 301 shows the current positions of wireless terminal 102 and 103 either on a map displayed on the display section or shows them on the display section by means of characters. With such displaying, by one acquisition request, the user is able to know at a time the current positions of all wireless terminal apparatus 101 and 102 that belong under the group that the user specifies.

Thus according to position information notification system 300 of Embodiment 3, the configuration is such that, by using personal handy phone apparatus 301, position information acquisition request is implemented as in Embodiment 1 and current positions of a number of wireless terminal apparatus 101 and 102 are displayed, so that the same effect is achieved as Embodiment 1 by the use of personal handy phone apparatus 301.

### (Embodiment 4)

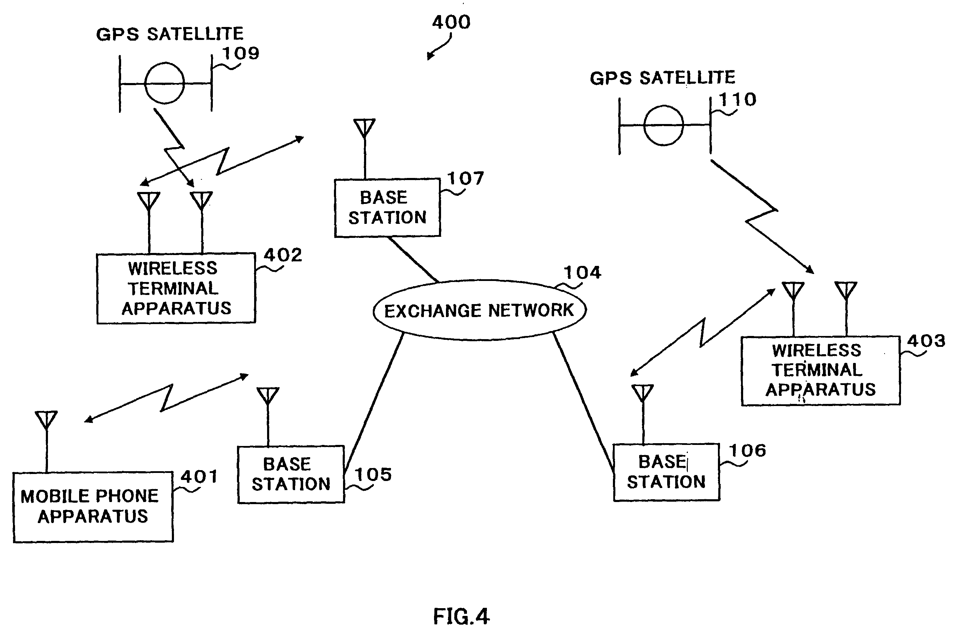

FIG.4 is a block diagram showing a configuration of a position information notification system according to Embodiment 4 of the present invention. In FIG.4, however, sections that correspond with those in FIG. 1 will be given the same numerals without further description.

The difference between position information notification system 400 of Embodiment 4 shown in FIG.4 and FIG.1 is that, in the former, the position information acquiring terminal, mobile phone apparatus 401 has a table that lists groups and wireless terminals in correspondence and acquires current position information for wireless terminal apparatus 402 and 403 without using an administrating station.

In mobile phone apparatus 401, a number of predetermined wireless terminal apparatus 402 and 403 are registered as one group with a table. Moreover, in case the user of mobile phone apparatus 401 performs the control for a position information acquisition request in respect to the above group, mobile phone apparatus 401 features the function for requesting all wireless terminal apparatus 402 and 403 of the group to send current position information and for showing the current positions that accord with the current position information sent to mobile phone apparatus 401 from wireless terminal apparatus 402 and 403 in response to the above request by showing them either on a map displayed on a display section or by showing them by way of showing characters on the display section.

Wireless terminal apparatus 402 and 403 feature the function for acquiring their own current position information by way of receiving electric waves that are sent from GPS satellites 109 and 110 for acquisition of position information, when a transmission request for current position information is made from mobile phone apparatus 401, and for modulating the current position information into transmit signals and sending the transmit signals to mobile phone apparatus 401.

However, such configuration is also possible that wireless terminal apparatus 402, 403, and mobile phone apparatus 401 each features both of the above function that wireless terminal apparatus 402 and 403 each feature and the function that mobile phone apparatus 401 features .

The operation of position information notification system 400 of such configuration will be described.

First, when the user performs the control for a current position information acquisition request in respect to a desired group by key-input using mobile phone apparatus 401, in response to this control, a position information acquisition request signal will be sent to wireless terminal apparatus 402 and 403 that belong under the desired group via base station 105 and exchange network 104.

Upon receiving the position information acquisition request signal, wireless terminal apparatus 402 and 403 acquire their own current position information by way of receiving electric waves that are sent from GPS satellites 109 and 110 for acquisition of position information and then send the current position information to mobile phone apparatus 401 via base station 106, 107, and exchange network 104.

Upon receiving the current position information for wireless terminal apparatus 402 and 403, mobile phone apparatus 401 shows the current positions of wireless terminal apparatus 402 and 403 either on a map displayed on the display section or shows them on the display section by means of characters according to the received current position information. With such displaying, by one acquisition request, the user is able to know at a time the current positions of all wireless terminal apparatus 402 and 403 that belong under the group that the user specifies.

According to position information notification system 400 of Embodiment 4, the configuration is such that when a position information acquisition request is to be made, a group subject to acquisition of position information is specified from predetermined groups and current position information is acquired at a time in respect to all wireless terminal apparatus belonging under this group, so that it is unnecessary to perform the control for a position information acquisition request on a per wireless terminal apparatus basis as it was conventionally done and position information for a number of wireless terminal apparatus can be acquired in a simple way.

Moreover, only when a position information acquisition request is made from mobile phone apparatus 401 to wireless terminal apparatus 402 and 403 that belong under the group specified by the user, will wireless terminal apparatus 402 and 403 send their own current position information. In other words, when the information recipient does not need position information, no position information will be sent from wireless terminal apparatus 402 and 403. Consequently, it is possible to reduce communication traffic compared to the above conventional position information notification system in which a wireless terminal apparatus sends position information regardless whether the information recipient is in need of such information.

Moreover, since wireless terminal apparatus 402 and 403 acquire their own current position information using electric waves sent form GPS satellites 109 and 110, it is possible to acquire position information that is more precise than the conventional area-unit position information.

### (Embodiment 5)

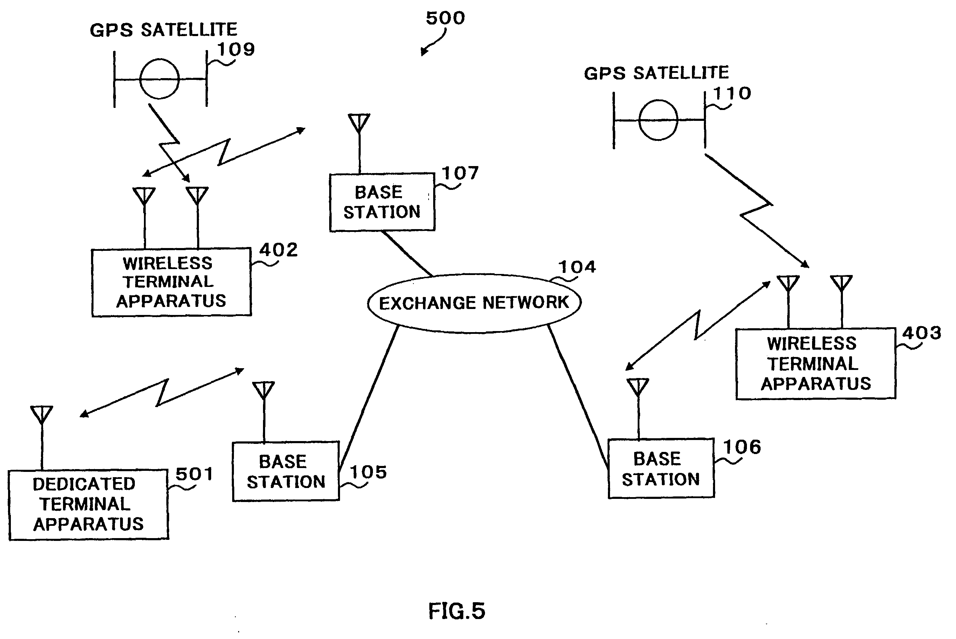

FIG.5 is a block diagram showing a configuration of a position information notification system according to Embodiment 5 of the present invention. In FIG.5, however, sections that correspond with those in FIG. 1 will be given the same numerals without further description.

The difference between position information notification system 500 of Embodiment 5 shown in FIG.5 and FIG.1 is that, in the former, dedicated terminal apparatus 501, which is dedicated to position information acquisition, is used as a position information acquiring terminal instead of mobile phone apparatus 401 to acquire current position information for wireless terminal 402 and 403.

In dedicated terminal apparatus 501, a number of predetermined wireless terminal apparatus 402 and 403 are registered as one group with a table. Moreover, in case the user of dedicated terminal apparatus 501 performs the control for a position information acquisition request in respect to the above group, dedicated terminal apparatus 501 features the wireless communication function of base station 105 and furthermore, in case the user of dedicated terminal 501 performs the control for a position information acquisition request in respect to the above group by key-input, features the function for requesting all wireless terminal apparatus 402 and 403 of the group to send current position information and for showing the current positions that accord with the current position information sent to dedicated terminal 501 from wireless terminal apparatus 402 and 403 in response to the above request by showing them on a map displayed on a display section or by showing them by way of showing characters on the display section.

The operation of position information notification system 500 of such configuration will be described.

First, when the user performs the control for a current position information acquisition request in respect to a desired group by key-input using dedicated terminal apparatus 501, in response to this control, a position information acquisition request signal that will be sent to wireless terminal apparatus 402 and 403 that belong under the desired group via base station 105 and exchange network 104.

Upon receiving the position information acquisition request signal, wireless terminal apparatus 402 and 403 acquire their own current position information by way of receiving electric waves that are sent from GPS satellites 109 and 110 for acquisition of position information and then send the current position information to dedicated terminal apparatus 501 via base station 106, 107, and exchange network 104.

Upon receiving the current position information for wireless terminal apparatus 402 and 403, dedicated terminal apparatus 501 shows the current positions of wireless terminal apparatus 402 and 403 either on a map displayed on the display section or shows them on the display section by means of characters. With such displaying, by one acquisition request, the user is able to know at a time the current positions of all wireless terminal apparatus 402 and 403 that belong under the group that the user specifies.

Thus according to position information notification system 500 of Embodiment 5, the configuration is such that, by using dedicated terminal apparatus 501, position information acquisition request is implemented as in Embodiment 4 and current positions of a number of wireless terminal 402 and 403 are displayed, so that the same effect is achieved as Embodiment 4 by the use of dedicated terminal apparatus 501 dedicated to position information acquisition.

### (Embodiment 6)

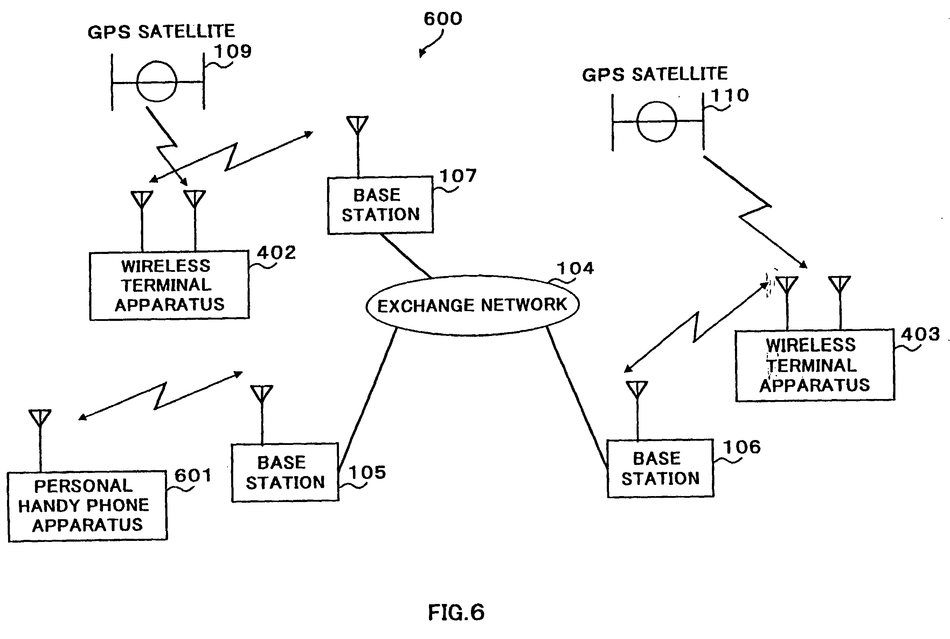

FIG.6 is a block diagram showing a configuration of a position information notification system according to Embodiment 6 of the present invention. In FIG. 6, however, sections that correspond with those in FIG. 4 will be given the same numerals without further description.

The difference between position information notification system 600 of Embodiment 6 shown in FIG. 6 and FIG.4 is that, in the former, personal handy phone apparatus 601 is used as a position information acquiring terminal instead of mobile phone apparatus 401 to acquire current position information for wireless terminal apparatus 402 and 403.

In personal handy phone apparatus 601, a number of predetermined wireless terminal apparatus 402 and 403 are registered as one group with a table. Moreover, in case the user of personal handy phone apparatus 601 performs the control for a position information acquisition request in respect to the above group, personal handy phone apparatus 601 features the function for requesting all wireless terminal apparatus 402 and 403 of the group to send current position information and for showing the current positions that accord with the current position information sent to personal handy phone apparatus 601 from wireless terminal apparatus 402 and 403 in response to the above request by showing them either on a map displayed on a display section or by showing them by way of showing characters on the display section.

The operation of position information notification system 600 of such configuration will be described.

First, when the user performs the control for a current position information acquisition request in respect to a desired group by key-input using personal handy phone apparatus 601, in response to this control, a position information acquisition request signal will be sent to wireless terminal apparatus 402 and 403 that belong under the desired group via base station 105 and exchange network 104.

Upon receiving the position information acquisition request signal, wireless terminal apparatus 402 and 403 acquire their own current position information by way of receiving electric waves that are sent from GPS satellites 109 and 110 for acquisition of position information and then send the current position information to personal handy phone apparatus 601 via base station 106, 107, and exchange network 104.

Upon receiving the current position information for wireless terminal apparatus 402 and 403, personal handy phone apparatus 601 shows the current positions of wireless terminal apparatus 402 and 403 either on a map displayed on the display section or shows them on the display section by means of characters. With such displaying, by one acquisition request, the user is able to know at a time the current positions of all wireless terminal apparatus 402 and 403 that belong under the group that the user specifies.

Thus according to position information notification system 600 of Embodiment 6, the configuration is such that, by using dedicated terminal apparatus 601, position information acquisition request is implemented as in Embodiment 4 and current positions of a number of wireless terminal 401 and 402 are displayed, so that the same effect is achieved as Embodiment 4 by the use of dedicated terminal apparatus 601.

### (Embodiment 7)

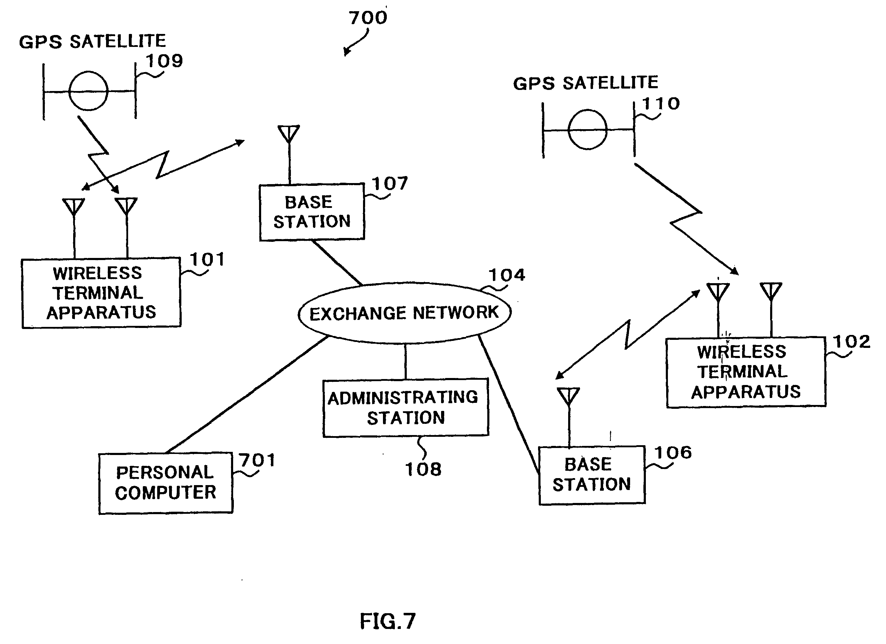

FIG.7 is a block diagram showing a configuration of a position information notification system according to Embodiment 7 of the present invention. In FIG. 7, however, sections that correspond with those in FIG. 1 will be given the same numerals without further description.

The difference between position information notification system 700 of Embodiment 7 shown in FIG.7 and Embodiment 1 is that, in the former, personal computer 701, which is a information processing apparatus, is wire-connected to exchange network 104 as a position information acquiring terminal and current position information for wireless terminal apparatus 101 and 102 is acquired through this personal computer 701.

Personal computer 701 features the function for sending a position information acquisition request signal to administrating station 108 in response to the user's key-input control for a current position information acquisition request in respect to a desired group, and for showing the current positions that accord with the current position information sent to personal computer 701 from administrating station 108 in response to the above acquisition request signal by showing them either on a map displayed on a display section built in personal computer 701 or by showing them by way of showing characters on the display section.

The operation of position information notification system 700 of such configuration will be described.

First, when the user performs the control for a current position information acquisition request in respect to a desired group by key-input using personal computer 701, in response to this control, a position information acquisition request signal will be sent to administrating station 108 via exchange network 104.

Upon receiving the position information acquisition request signal, administrating station 108 reads out from the table the telephone numbers and ID numbers of all wireless terminal apparatus 101 and 102 that belong under the group specified by the position information acquisition request signal and then requests via exchange network 104 and base stations 106 and 107 all wireless terminal apparatus 101 and 102 that belong under the group to send current position information.

Upon receiving this request, wireless terminal apparatus 101 and 102 acquire their own current position information by way of receiving electric waves that are sent from GPS satellites 109 and 110 for acquisition of position information and then send the current position information to administrating station 108 via base station 106, 107, and exchange network 104.

Upon receiving the current position information, personal computer 701 shows the current positions of wireless terminal 102 and 103 either on a map displayed on the display section or shows them on the display section by means of characters. With such displaying, by one acquisition request, the user is able to know at a time the current positions of all wireless terminal apparatus 101 and 102 that belong under the group that the user specifies.

Thus according to position information notification system 700 of Embodiment 7, the configuration is such that, by using personal computer 701, position information acquisition request is implemented as in Embodiment 1 and current positions of a number of wireless terminal apparatus 101 and 102 are displayed, so that the same effect is achieved as Embodiment 1 by the use of personal computer 701 for the sole use of position information acquisition.

### (Embodiment 8)

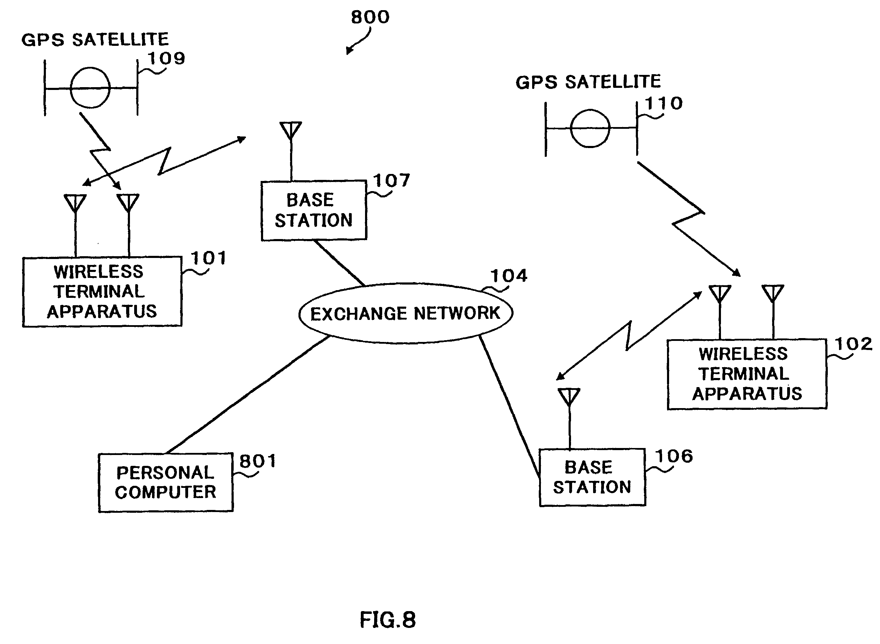

FIG.8 is a block diagram showing a configuration of a position information notification system according to Embodiment 8 of the present invention. In FIG. 8, however, sections that correspond with those in FIG.4 will be given the same numerals without further description.

The difference between position information notification system 800 of Embodiment 8 shown in FIG.8 and Embodiment 4 is that, in the former, personal computer 801, which is an information processing apparatus, is wire-connected to exchange network 104 as a position information acquiring terminal and current position information for wireless terminal apparatus 101 and 102 is acquired through this personal computer 801.

In personal computer 801, a number of predetermined wireless terminal apparatus 101 and 102 are registered as one group with a table. Moreover, personal computer 801 features the function for requesting via exchange network 104 and base stations 106 and 107 all wireless terminal apparatus 101 and 102 of the group to send current position information, when the user of personal computer 801 performs the control for a position information acquisition request to the above group by key-input, and for showing the current positions that accord with the current position information for all wireless terminal apparatus 101 and 102 sent to personal computer 801 in response to the above request by showing them either on a map displayed on a display section or by showing them by way of showing characters on the display section.

Wireless terminal apparatus 101 and 102 feature the function for acquiring their own current position information by way of receiving electric waves that are sent from GPS satellites 109 and 110 for acquisition of position information when a transmission request for current position information is made from personal computer 801, and for modulating the current position information into transmit signals and sending the transmit signals to personal computer 801.

The operation of position information notification system 800 of such configuration will be described.

First, when the user performs the control for a current position information acquisition request in respect to a desired group by key-input using personal computer 801, in response to this control, a position information acquisition request signal will be sent to wireless terminal apparatus 101 and 102 that belong under the desired group via exchange network 104 and base station apparatus 106 and 107.

Upon receiving the position information acquisition request signal, wireless terminal apparatus 101 and 102 acquire their own current position information by way of receiving electric waves that are sent from GPS satellites 109 and 110 for acquisition of position information and then send the current position information to personal computer 801 via base station 106, 107, and exchange network 104.

Upon receiving current position information for wireless terminal apparatus 101 and 102, personal computer 801 shows the current positions of wireless terminal apparatus 101 and 102 on a map displayed on the display section or show them on the display sections by means of characters, according to the received current position information. With such displaying, by one acquisition request, the user is able to know at a time the current positions of all the wireless terminal that belong under the group that the user specifies.

Thus according to position information notification system 800 of Embodiment 8, the configuration is such that, by using personal computer 801, position information acquisition request is implemented as in Embodiment 1 and current positions of a number of wireless terminal apparatus 101 and 102 are displayed, so that the same effect is achieved as Embodiment 4 by the use of personal computer 801 for the sole use of position information acquisition.

With regard to Embodiment 1 through Embodiment 8 above, a mobile phone, a dedicated terminal apparatus, a personal handy phone, and a personal computer is each used as an example of a position information acquiring terminal. However, what can be used as a position information acquiring terminal with the present invention is not limited to the above devices. According to the present invention, any device with functions equivalent to those of the above devices can be used as a position information acquiring terminal.

As described above, according to the present invention, position information can be acquired at a time in respect to a number of wireless terminals by simple operations while communication traffic increase is minimized, and furthermore precise information can be acquired regarding the positions of the wireless terminals.

This application is based on Japanese Patent Application No.11-190248 filed on July 5, 1999, entire content of which is expressly incorporated by reference herein.

## Claims

1. A position information notification system, comprising:
a position information acquiring terminal that sends an acquisition request for position information that denotes a current position of a wireless terminal and information that denotes a group specified by a user of said position information acquiring terminal to an administrating station and that upon one request acquires position information for all wireless terminals of said group and notifies said user of the acquired position information,
an administrating station that, in response to the acquisition request from said position information acquiring terminal, requests all wireless terminals that belong under said group to send position information and that sends position information returned thereto in response to the request to said position information acquiring terminal, and
a plurality of wireless terminals that, in response to the request from said administrating station, send position information for said plurality of terminals to said administrating station.

2. A position information notification system, comprising:
a position information acquiring terminal that sends an acquisition request for position information that denotes a current position of a wireless terminal to all wireless terminals that belong under a group specified by a user of said position information acquiring terminal, and
a plurality of wireless terminals that, in response to the acquisition request from said position information acquiring terminal, send position information for said plurality of wireless terminals to said position information acquiring terminal.

3. A position information notification method, wherein, a plurality of wireless terminals subject to acquisition of current position are divided into a plurality of groups , and when a user of a position information acquiring terminal makes an acquisition request for position information that denotes a current position of a wireless terminal, in response to one request, said user is notified by way of said position information acquiring terminal of position information for all wireless terminals that belong under said group specified by said user.
